# EUROPEAN PATENT SPECIFICATION

(11) **EP 1 273 333 B1**
(45) Date of publication and mention of the grant of the patent: **29.06.2005**
(21) Application number: 02425211.6
(22) Date of filing: 09.04.2002
(51) Int. Cl.: B01D 29/70, B01D 46/02, B01D 46/04

(54) **Air filter element**
Luftfilterelement
Element de filtre a air

(30) Priority: 06.07.2001 IT MO20010141
(43) Date of publication of application: 08.01.2003
(73) Proprietor: WAM S.p.A., 41030 Ponte Motta Cavezzo (Modena) (IT)
(72) Inventor: Marchesini, Vainer, 41030 San Prospero (province of Modena) (IT)
(74) Representative: Gotra, Stefano

(56) References cited:
- FR-A- 2 377 832
- JP-A- 53 083 169
- US-A- 3 606 736
- US-A- 3 856 489
- US-A- 4 149 863
- US-A- 5 308 485

## Description

Specifically, though not exclusively, the invention is usefully applied to sleeve filters used in filtering dust from air or for solid-gas separation in large loose solid containers.

In particular the invention relates to a filter element made according to the preamble of the first claim.

Various types of filter elements of the above-mentioned type exist in the prior art, all of which are subject to improvement for various reasons.

For example document US 5,308,485 discloses a filter assembly for use in a baghouse having a cell plate provided with openings. The filter assembly includes a collar, filter bag, tubular supporting cage and locking ring. The filter bag filters particulate material and extends from below the cell plate. The collar supports the filter bag and has a longitudinally extended portion and a flange portion. The longitudinally extended portion is affixed lo the filter bag below the cell plate, while the flange portion extends along the cell plate as a rim above a respective opening. The collar acts as a gasket to seal a respective opening in the cell plate.

The tubular supporting cage has a longitudinally extended portion that structurally supports the filter bag. The locking ring is integrally fixed to the supporting cage and locks an arrangement of the filter bag, collar and cage in place. The locking ruing also can include a venturi affixed thereto to assist in filtering and cleaning operations.

Firstly, the prior-art filter elements can be improved in terms of simplicity and rapidity of assembly and removal of their various components.

Secondly, in known filters differentiated filtering, according to the material to be filtered, is a particularly laborious task.

Thirdly, the efficiency of the filter cleaning operations can be improved. Cleaning is normally achieved by periodically aiming strong jets of compressed air against the filtering surface.

The main aim of the present invention is to provide a filter element the various components of which can be discarded separately into special bins when worn. A further advantage is that the invention makes available a filter which is particularly easy to clean, using a compressed air system.

These aims and advantages and others besides are all attained by the invention as it is characterised in the appended claims.

Further characteristics and advantages of the present invention will better emerge from the detailed description that follows of a preferred but non-exclusive embodiment of the invention, illustrated purely by way of a nonlimiting example in the accompanying figures of the drawings, in which:

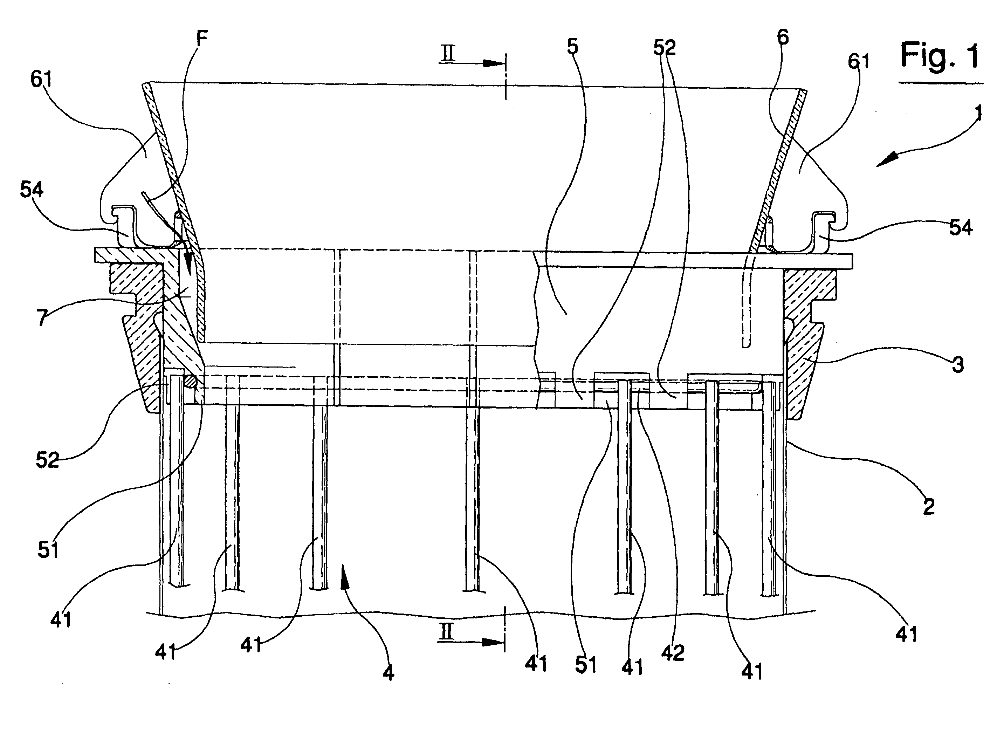

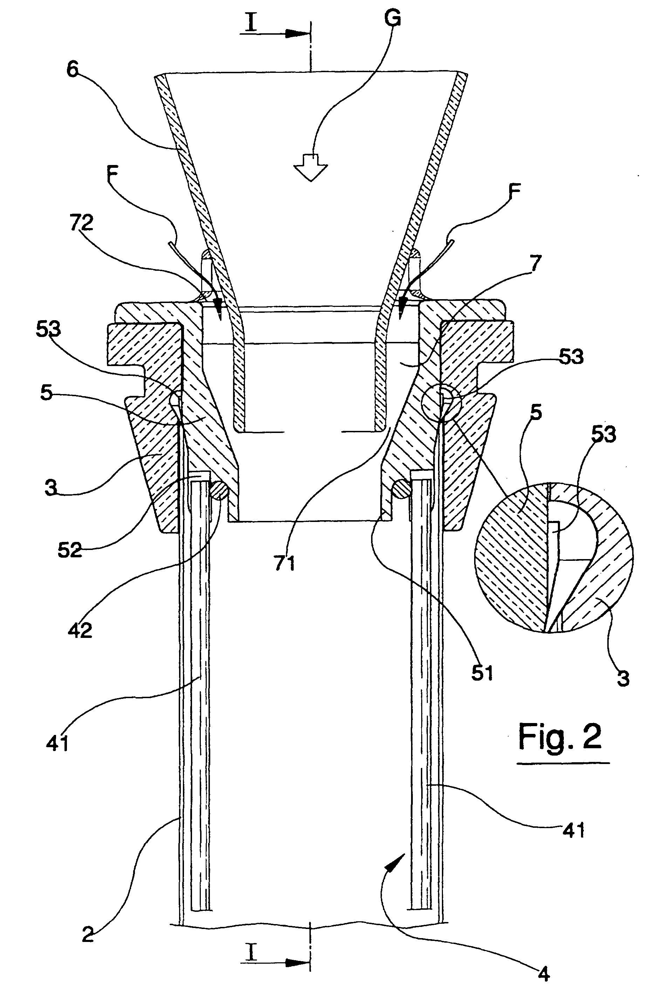

figure 1 is a partial side view, partly sectioned, according to line I-I of figure 2, of a filter made according to the present invention;
figure 2 is the section of line II-II of figure 1.

With reference to the figures, 1 denotes in its entirety a filter for airborne fluid (shown in part) comprising a flexible filter body 2 of a type commonly known as a "sleeve" and indeed which is normally used in sleeve filters. In this embodiment the body 2 has an oval transversal section.

The body 2 exhibits at one end a single opening for passage of the fluid. In the present embodiment the flow of the fluid to be filtered proceeds from the outside towards the inside of the body 2, so that the opening of the body 2 effectively represents the outlet for the filtered air. It is, however, possible in further embodiments of the invention, to have an inverse air flow (from the inside towards the outside) in which case the opening would be the intake for the powder-air mixture.

The edge of the body 2 which delimits the opening is constrained, in a known way, to an internal surface of an annular first support 3 or collar (in the preferred embodiment the plan shape is oval in conformity with the shape of the body 2). The first support 3 is preferably made of an elastically deformable material

Inside the body 2 is a stiffening frame 4 for keeping the body 2 tense and open in an effective operative configuration. The frame 4 comprises in the preferred embodiment a cage of longitudinal elements 41 (preferably made of metal) having an end coupled (preferably removably) to a head (not illustrated) of oval shape (like the body 2 shape) located inside the body 2. At the opposite end the longitudinal elements 41 are fixed to an annular end element 42 (oval like the section of the body 2). The end element 42, which in a further embodiment could also have a discontinuous annular shape, is removably press-fitted in a seating afforded on a second support 5, inserted partially internally of the first support 3. This seating is defined by two projecting perimeter edges 51 and 52, facing and parallel to one another, one located more externally than the other. One of the edges, in the present example the more external edge 52, exhibits interruptions for housing parts of ends of the longitudinal elements 41 anchored to the annular end element 42. The frame can be removed from the second support 5 by simple traction to detach one from the other.

The second support 5 exhibits an external surface, with an oval transversal section, joined to the internal surface of the first support 3. The second support 5 is friction-coupled to the first support 3: in particular, there is friction in the opposite rounded end zones of the oval section (and preferably one in the curved end zones). The second support 5 is made of a less deformable material (preferably plastic) than the first support 3 which is more flexible. The greater rigidity of the internal second support 5 with respect to the external first support 3 means that a stable and safe coupling can be achieved which is nonetheless easy to remove, i.e. insertion and removal of the second support 5 from the first support 3 is simply achieved. To improve the stability of the coupling, the second support 5 is provided with one or more reliefs 53 which project from its external surface and which couple with specially-shaped surfaces on the recesses afforded internally of the first support 3. The reliefs 53 are preferably arranged contiguous or in proximity of the zones of the external surface friction-coupled to the first support 3. In particular, each relief 53 separates two distinct zones of the external surface of the second support 5 which are, respectively, one friction-coupled with the first support 3 and the other facing, with no friction-coupling or with a little play. In the illustrated embodiment there are four reliefs 53 which separated two friction-coupled zones (each curved in shape, substantially semi-cylindrical, and situated, considering the oval shape of the second support 5, at the two opposite ends thereof) and two non-friction coupled zones (substantially flat and situated in the two central opposite parts of the external surface of the second support 5). The filtering element 1 is provided with a nozzle 6, preferably a venturi tube shape, predisposed for periodical inlet of a jet of compressed air into the body 2, through the opening, for cleaning the filter surface. The means for generating and conveying the compressed air are of known type and not illustrated.

The width of the opening for outlet of the purified air is defined by the width of the opening situated at the centre of the more internal second support 5.

A part of the venturi tube is inserted into the second support 5, while another part thereof, external to the second support 5, exhibits on opposite sides two hooking elements 61 coupled to two corresponding hooking elements 54 borne by the second support 5.

The nozzle 6 (venturi tube) is conformed and arranged, with respect to the opening and, in particular, the second support 5, in such a way that about the part of the nozzle which is internal of the second support 5 a secondary annular conduit 7 is defined for introduction into the body 2 of supplementary cleaning air, communicating with the outside environment and terminating internally of the body 2 (as indicated by arrows F).

The outlet 71 of the secondary conduit 7 is annular and is situated externally of the outlet of the venturi tube. The inlet 72 of the secondary conduit 7 is also annular and is situated internally with respect to the internal edge of the support 5. Through this second inlet 72 a supplementary flow of cleaning air can be taken in from the outside by a venturi effect; this extra flow of air contributes to the cleaning operation on the filter body 2, in addition to the compressed air injected through the venturi tube.

The final tract of the secondary conduit 7, i.e. the tract terminating at the annular outlet 71, exhibits a section which converges towards the inside of the body 2.

During a periodical filter cleaning phase, in a known cycle of operation, a violent jet of compressed air is injected through the venturi tube in order to detach impurities deposited on the outside surface of the body 2 during normal sleeve filtering operations. The main flow G of cleaning air entrains a supplementary flow F of air from the outside through the annular secondary conduit surrounding a part of the nozzle 6 injecting the main flow, increasing filter cleaning efficiency.

Once the second support 5 and the frame 4 (normally made of two different materials) have come to the end of their working lives, they can easily be separated (by simple manual removal), and can be discarded in specially-differentiated bins.

Assembly and de-assembly of the various parts of the air filter is extremely simple: in particular the coupling and separation of the two supports, for the sleeve and frame, can be done manually, with ease and without any need for special tools.

## Claims

1. An air filter element comprising a filter body (2), having an opening for passage of cleaned or polluted air, an edge of the opening being constrained to an annular first support (3), a frame (4) being inserted in the body (2), **characterised in that** the frame (4) is constrained to a second support (5) inserted at least partially in the first support (3), the frame (4) comprising an annular end element (42) which can be continuous or discontinuous, pressure-fitted in a seating afforded on the second support (5), said seating being defined by two facing projecting edges (51 and 52).

2. The air filter element of claim 1, **characterised in that** the second support (5) is coupled with interference to the first support (3).

3. The air filter element of claim 1 or 2, **characterised in that** the second support (5) is made of a less deformable material than a material used to make the first support (3).

4. The air filter element of any one of the preceding claims, **characterised in that** the second support (5) has an external surface from which at least one relief (53) projects, which relief (53) is coupled with a recess afforded on an internal surface of the first support (3).

5. The air filter element of claim 1**, characterised in that,** at least one of said projecting edges (52) exhibits interruptions for housing parts of the frame (4) anchored to the end element (42).

6. An air filter element, according to any one of the preceding claims, comprising a flexible filter body (2), provided with an opening for outlet of purified air to which a nozzle (6) is associated, preferably a venturi tube shape, for periodical input into the body (2) of a compressed air jet for cleaning, **characterised in that** externally of the nozzle (6) there is at least one secondary intake (72) for passage of supplementary cleaning air from an outside environment into the body (2).

7. The air filter element of claim 6, **characterised in that** around the nozzle (6), for example between the nozzle (6) and a wall of the filter element, there is an annular conduit (7) for inlet of supplementary air for cleaning, having at least one tract which has a passage section which converges internalwise of the body (2).

## Patentansprüche

1. Luftfilterelement, enthaltend einen Filterkörper (2), der eine Öffnung für den Durchlass von gereinigter oder verschmutzter Luft hat, wobei ein Rand der Öffnung an einer ersten ringförmigen Halterung (3) befestigt ist, und wobei ein Rahmen (4) in den Körper (2) eingesetzt ist, **dadurch gekennzeichnet, dass** der Rahmen (4) an einer zweiten Halterung (5) befestigt ist, eingesetzt wenigstens teilweise in die erste Halterung (3), wobei der Rahmen (4) ein ringförmiges Endelement (42) enthält, welches kontinuierlich oder unterbrochen sein kann, eingesetzt durch Druck in einen Sitz, der von der zweiten Halterung (5) aufgewiesen ist, wobei der genannte Sitz durch zwei einander zugewandte und hervorstehende Ränder (51 und52) beschrieben wird.

2. Luftfilterelement nach Patentanspruch 1, **dadurch gekennzeichnet, dass** die zweite Halterung (5) mit Übermass mit der ersten Halterung (3) verbunden ist.

3. Luftfilterelement nach Patentanspruch 1 oder 2, **dadurch gekennzeichnet, dass** die zweite Halterung (5) aus einem weniger verformbaren Material hergestellt ist als das zur Herstellung der ersten Halterung (3) verwendete.

4. Luftfilterelement nach einem beliebigen der vorstehenden Patentansprüche, **dadurch gekennzeichnet, dass** die zweite Halterung (5) eine äussere Oberfläche aufweist, von welcher aus sich wenigstens ein Vorsprung (53) erstreckt, welcher Vorsprung (53) mit einer Vertiefung verbunden ist, aufgewiesen an einer inneren Oberfläche der ersten Halterung (3).

5. Luftfilterelement nach Patentanspruch 1, **dadurch gekennzeichnet, dass** wenigstens einer der genannten hervorstehenden Ränder (52) Unterbrechungen zur Aufnahme von Teilen des Rahmens (4) aufweist, verankert an dem Endelement (42).

6. Luftfilterelement nach einem beliebigen der vorstehenden Patentansprüche, enthaltend einen flexiblen Filterkörper (2), versehen mit einem Auslass von gereinigter Luft, welchem eine Düse (6) zugeordnet ist, vorzugsweise in Form eines Venturi-Rohres, für den periodischen Einlass in den Körper (2) eines Druckluftstrahls zum Reinigen, **dadurch gekennzeichnet, dass** sich ausserhalb der Düse (6) wenigstens ein sekundärer Einlass (72) für den Durchlass von zusätzlicher Reinigungsluft von aussen in das Innere des Körpers (2) befindet.

7. Luftfilterelement nach Patentanspruch 6, **dadurch gekennzeichnet, dass** um die Düse (6) herum, zum Beispiel zwischen der Düse (6) und einer Wand des Filterelementes, eine ringförmige Leitung (7) für den Einlass zusätzlicher Reinigungsluft vorhanden ist, welche wenigstens einen Abschnitt mit einem Durchlassquerschnitt aufweist, welcher zum Inneren des Körpers (2) hin konvergiert.

## Revendications

1. Elément de filtre à air comprenant un corps filtrant (2), pourvu d'une ouverture pour le passage d'air propre ou polué, un bord de l'ouverture étant fixé à un premier support annulaire (3), un cadre (4) étant inséré dans le corps (2), **caractérisé en ce que** le cadre (4) est fixé à un second support (5) inséré au moins partiellement dans le premier support (3), le cadre (4) comprenant un élément d'extrémité annulaire (42) pouvant être continu ou discontinu, encastré à pression dans un logement présent sur le second support (5), ledit logement étant défini par deux bords saillants (51 et 52) opposés.

2. Elément de filtre à air selon la revendication 1, **caractérisé en ce que** le second support (5) est accouplé par interférence au premier support (3).

3. Elément de filtre à air selon la revendication 1 ou 2, **caractérisé en ce que** le second support (5) est réalisé en un matériau moins déformable que celui utilisé pour réaliser le premier support (3).

4. Elément de filtre à air selon n'importe laquelle des revendications précédentes, **caractérisé en ce que** le second support (5) présente une surface externe de laquelle est saillant un relief (53), lequel relief (53) est accouplé avec un renfoncement présenté par une surface interne du premier support (3).

5. Elément de filtre à air selon la revendication 4, **caractérisé en ce qu'**au moins un des bords saillants (52) présente des interruptions pour le logement de parties du cadre (4) ancrées à l'élément d'extrémité (42).

6. Elément de filtre à air selon n'importe laquelle des revendications précédentes, comprenant un corps de filtre flexible (2), pourvu d'une ouverture pour la sortie de l'air purifié à laquelle une buse (6) est associée, préférablement en forme de tube Venturi, pour l'introduction périodique dans le corps (2) d'un jet d'air comprimé pour le nettoyage, **caractérisé en ce qu'**à l'extérieur de la buse (6) se trouve au moins une entrée secondaire (72) pour le passage d'air de nettoyage supplémentaire d'un environnement externe à l'intérieur du corps (2).

7. Elément de filtre à air selon la revendication 6, **caractérisé en ce qu'**autour de la buse (6), par exemple entre la buse (6) et une paroi de l'élément filtrant, se trouve un conduit annulaire (7) pour l'entrée d'air supplémentaire pour le nettoyage, ayant au moins une zone avec une section de passage convergente vers l'intérieur du corps (2).
